# EUROPÄISCHE PATENTANMELDUNG

(11) **EP 3 730 268 A1**
(43) Veröffentlichungstag der Anmeldung: **28.10.2020**
(21) Anmeldenummer: 20169034.4
(22) Anmeldetag: 09.04.2020
(51) Int. Cl.: B29C 33/30, B29C 43/32, B21D 37/12, B29C 45/17

(54) **ABSTIMMPLATTE FÜR EINE FORMVORRICHTUNG UND MIT DIESER AUSGESTATTETE FORMVORRICHTUNG ZUM FORMEN VON GEFORMTEN GEGENSTÄNDEN**

(30) Priorität: 25.04.2019 DE 202019102344 U
(71) Anmelder: KNARR Vertriebs GmbH, 95233 Helmbrechts (DE)
(72) Erfinder: KNARR, Rainer, 95233 Helmbrechts (DE)
(74) Vertreter: Samson & Partner Patentanwälte mbB

(57) **Zusammenfassung**

Die Erfindung betrifft Abstimmplatten für Formvorrichtungen zum Formen von geformten Gegenständen, sowie Formvorrichtungen mit derartigen Abstimmplatten. Die Abstimmplatten weisen in einem Hauptkörper eine Führungsausnehmung zur Aufnahme einer Führungssäule der Formplattenanordnung und mindestens eine Befestigungsausnehmung zur Aufnahme von Befestigungsmitteln auf.

## Beschreibung

### Gebiet der Erfindung

Die Erfindung betrifft eine Abstimmplatte zum Abstimmen wenigstens zweier Formelemente einer Formvorrichtung zum Formen von geformten Gegenständen, insbesondere eines Spritzguss-, Druckguss- oder Präge-/Biegewerkzeugs, sowie eine mit einer Abstimmplatte ausgestattete Formvorrichtung zum Formen von geformten Gegenständen.

### Hintergrund der Erfindung

Abstimmplatten für Formvorrichtungen zum Formen von geformten Gegenständen sind bekannt. Regelmäßig sind Abstimmplatten aus einem Hauptkörper aufgebaut und weisen wenigstens eine Befestigungsausnehmung auf, mit Hilfe derer die Abstimmplatte zwischen zwei Formplatten (Auswerfer- und Düsenseite) montiert werden kann.

Um einen geformten Gegenstand herzustellen, werden beispielsweise zwei Formhälften, die jeweils in einer von zwei Formplatten montiert oder ausgestaltet sind, über einen Schließ- bzw. Verriegelungsmechanismus in einer Linearbewegung aufeinander zu gefahren, wobei zwischen den beiden Formhälften eine Kavität für den zu formenden Gegenstand gebildet ist. Zur Darstellung der vorliegenden Erfindung können die Begriffe "Formhälfte" und "Formplatte" im Wesentlichen gleichgesetzt werden, falls nicht anders angegeben. Sofern ein Formwerkzeug für die Schneid- und/oder Umformtechnik (z.B. als Präge-/Biegewerkzeug) ausgelegt ist, umfasst dieses ein Teil (z.B. Präge-/Biegeteil) mit einer Kontur des zu formenden Gegenstands, der dann aus einem üblicherweise festen Material geformt wird.

Die beiden Formplatten definieren eine Formoberseite und eine Formunterseite. Die Formoberseite wird auch Anguss/Anspritz- oder Düsenseite und die Formunterseite als Ausstoß- oder Auswurfseite bezeichnet.

Abstimmplatten (auch als Druckplatten bezeichnet) haben dabei die Aufgabe, die relative Lage der beiden Formplatten beim Schließen abzustimmen. Dies ist insbesondere von Bedeutung, da ein Versatz der beiden Formhälften oder beispielsweise eines Präge-/Biegewerkzeugs im Vergleich zum zu prägenden/biegenden Material Fehler bei der Herstellung der geformten Gegenstände verursachen kann oder ein Versatz die Kontur der Formhälften oder das Präge-/Biegewerkzeug beschädigen könnte. Insgesamt ist es erforderlich, die Abstimmung der beiden Formplatten in einem sehr engen Toleranzbereich durchzuführen.

Allgemein können Formvorrichtungen beispielsweise beim Spritzgießen bzw. Spritzgussverfahren eingesetzt werden, wobei ein Kunststoffgranulat oder eine Kunststoffschmelze in den Hohlraum der Formhälften eingespritzt wird. Darüber hinaus können Formvorrichtungen auch beim Druckgussverfahren beispielsweise bei einem Druckgusswerkzeug eingesetzt werden, wobei Metalle zumeist mit einem niedrigen Schmelzpunkt als flüssige Schmelze mit hohem Druck und hoher Geschwindigkeit in die Kavität zwischen den Formhälften eingebracht wird.

Nach einem Erkalten bzw. Erstarren oder Prägen/Biegen des jeweils geformten Gegenstands lässt sich dieser über einen bekannten Auswurfmechanismus beispielsweise mit Auswerferstiften oder anders geeigneten, dem Fachmann bekannten, Ausstoßvorrichtungen nach Auseinanderfahren der beiden Formhälften zum Öffnen aus der unteren Formhälfte heraus stoßen.

Aus dem Stand der Technik sind Abstimmplatten bekannt, welche aus einem Hauptkörper aufgebaut sind und wenigstens eine Befestigungsausnehmung aufweisen, wie beispielsweise die Modelle E2680 oder E2682 der Firma Meusburger oder das Modell BR2680 der Firma Bru y Rubio. Diese bekannten Abstimmplatten können an den Kanten der Formplatte montiert werden. Eine Montage an der Position der Führungssäulen, beispielsweise an den Ecken der Formplatten, ist nicht möglich, so dass die Parallelität des Werkzeugs keine exakte Lage auf die ganze Fläche der Formplatten gewährleistet. Dies kann zu Qualitätsverlusten führen.

Insgesamt weisen die aus dem Stand der Technik bekannten Lösungen zumeist eine nicht optimale Druckverteilung, eine schwierige Abstimmung des ermittelten Fertigmaßes, einen hohen Verschleiß und/oder verringerte Qualität des geformten Gegenstands auf.

### Zusammenfassung der Erfindung

Vor diesem Hintergrund ist es Aufgabe der Erfindung, eine verbesserte Abstimmplatte bereit zu stellen.

Diese Aufgabe wird jeweils durch die Gegenstände der unabhängigen Ansprüche gelöst. Bevorzugte Ausführungsformen sind in den abhängigen Ansprüchen beschrieben.

In einem ersten Aspekt betrifft die Erfindung eine Abstimmplatte für Formvorrichtungen. Die Abstimmplatte weist in einem Hauptkörper mindestens eine Befestigungsausnehmung sowie eine Führungsausnehmung auf. Die mindestens eine Befestigungsausnehmung ist dazu geeignet, Befestigungsmittel aufzunehmen. Bei den aufzunehmenden Befestigungsmitteln kann es sich beispielsweise um Schrauben handeln.

Ferner ist die Führungsausnehmung dazu geeignet, eine Führungssäule einer Formplattenanordnung aufzunehmen. Dies ermöglicht die Montage der Abstimmplatte an einer Formplatte an der Position einer Führungssäule. Beispielsweise im Falle einer Anordnung von Führungssäulen an den Ecken einer Formplatte erlaubt dies eine Druckverteilung auf einen großen Teil oder gar die Gesamtheit der verfügbaren Fläche.

Die Begriffe Ausnehmung oder Aussparung bezeichnen im Kontext der vorliegenden Offenbarung jegliche Bereiche am Hauptkörper, in denen kein Hauptkörpermaterial vorhanden ist. Der Begriff impliziert kein bestimmtes Fertigungsverfahren für die Herstellung dieses Bereiches. Insbesondere können die so bezeichneten Bereiche durch trennende Verfahren (insbesondere Zerspanen, wie etwa Bohren oder Fräsen) und/oder durch urformende Verfahren (insbesondere Gießen) und/oder durch umformende Verfahren (insbesondere Pressen) hergestellt werden.

Vorzugsweise ist die Abstimmplatte im Wesentlichen rechteckig oder im Wesentlichen rund. Hierbei bezeichnen die Formangaben (rechteckig bzw. rund) die Umrisse der Abstimmplatte in einer Draufsicht, etwa entlang einer Längsachse der Befestigungsausnehmung oder der Führungsausnehmung.

Vorzugsweise ist die Führungsausnehmung im Wesentlichen an einem Mittelpunkt der Abstimmplatte angeordnet. Bei dem Mittelpunkt kann es sich um den geometrischen Mittelpunkt (z.B. in einer Draufsicht) oder um den Masseschwerpunkt des Hauptkörpers handeln. Die zentrale Anordnung erlaubt beispielsweise eine platzsparende Anordnung um die Führungssäule. In anderen Ausführungsformen kann es vorteilhaft sein, die Führungsausnehmung nicht mittig anzuordnen. Dies erlaubt beispielsweise eine passgenaue Ausrichtung der Abstimmplatte auf bestimmten Formplatten, etwa mit asymmetrisch ausgestalteten Randbereichen.

Vorzugsweise weist die Abstimmplatte mehrere Befestigungsausnehmungen auf. Insbesondere können diese mehreren Befestigungsausnehmungen im Wesentlichen symmetrisch um einen Mittelpunkt oder eine Mittelachse der Abstimmplatte angeordnet sein. Dies erlaubt eine gleichmäßige und spannungsfreie Montage der Abstimmplatte auf einer Formplatte. Bei der symmetrischen Anordnung kann es sich beispielsweise um eine punktsymmetrische Anordnung um den Mittelpunkt, eine achsensymmetrische Anordnung um die Mittelachse, eine rotationssymmetrische Anordnung um den Mittelpunkt oder eine Kombination des Vorstehenden handeln. In anderen Ausführungsformen kann es vorteilhaft sein, die Befestigungsausnehmungen nicht symmetrisch anzuordnen. Dies erlaubt beispielsweise bei einer Vielzahl weiterer Elemente auf der Formplatte eine optimale oder jedenfalls verbesserte Nutzung des auf der Formplatte zur Verfügung stehenden Platzes.

Vorzugsweise weist die Abstimmplatte mindestens eine Absenkung zum Eingreifen auf. Die Absenkung zum Eingreifen kann etwa am Umfang der Abstimmplatte, insbesondere an einer Ecke der Abstimmplatte, angeordnet sein. Dies dient einer erleichterten Montage, Wartung, sowie als Schutz vor Beschädigung der Formplatten bei der Herstellung der Werkzeuge.

Vorzugsweise weist die Befestigungsausnehmung eine Senkung zur Aufnahme eines Schraubenkopfes auf. Dies erlaubt eine Befestigung Abstimmplatte an einer Formplatte ohne Überstand etwa eines Schraubenkopfes über die Oberfläche der Abstimmplatte.

Vorzugsweise ist die Abstimmplatte gehärtet. Dies schützt die (in der Regel nicht gehärteten) Formplatten vor Abnutzung und Verschleiß. Das wiederum führt zur Steigerung der Qualität der geformten Gegenstände.

In einem zweiten Aspekt betrifft die Erfindung eine Formvorrichtung umfassend mindestens eine Abstimmplatte gemäß dem ersten Aspekt. Des Weiteren umfasst die Formvorrichtung eine erste Formplatte und eine zweite Formplatte.

Die erste Formplatte hat mindestens eine Führungssäule zum Führen der zweiten Formplatte. Die zweite Formplatte hat mindestens eine Plattenausnehmung zur Aufnahme der mindestens einen Führungssäule. Die Kombination von Plattenausnehmung und Führungssäule erlaubt es, die beiden Formplatten (und Formhälften) aufeinander zu fahren.

Die Abstimmplatte ist dazu geeignet, die Führungssäule(n) in der (den) Führungsausnehmung(en) aufzunehmen. Vorzugsweise entspricht die Anzahl von Führungssäulen der Anzahl von Plattenausnehmungen. Beispielsweise kann diese Anzahl eins, zwei, drei, vier, etc. betragen.

Vorzugsweise weist die erste Formplatte mindestens eine Abstimmabsenkung auf. Alternativ oder zusätzlich weist die zweite Formplatte mindestens eine Abstimmabsenkung auf. Die Abstimmabsenkung ist dazu geeignet ist, eine Abstimmplatte aufzunehmen. Insbesondere kann die mindestens eine Abstimmplatte dazu ausgelegt sein, bündig oder überstehend in die mindestens eine Abstimmabsenkung eingesetzt zu werden.

Ferner vorzugsweise ist die Abstimmabsenkung um die Führungssäule der ersten Formplatte oder um die Plattenausnehmung der zweiten Formplatte ausgebildet.

Beispielsweise kann die die mindestens eine Abstimmabsenkung an dem äußeren Umfang und/oder einer äußeren Ecke der ersten Formplatte und/oder der zweiten Formplatte angeordnet sein.

### Kurzbeschreibung der Figuren

Ausführungsbeispiele der Erfindung sind im Folgenden unter Bezugnahme auf die beigefügten, schematischen Zeichnungen näher erläutert. Elemente, die sich in den verschienen Figuren entsprechen, tragen dieselben Bezugszeichen. Dabei zeigt:
- Fig. 1: eine Draufsicht auf eine Abstimmplatte gemäß einer Ausführungsform mit zwei Querschnittsdarstellungen entlang der Schnittebenen A-A bzw. B-B;
- Fig. 2: eine Draufsicht auf eine Formvorrichtung mit vier Abstimmplatten gemäß einer Ausführungsform;
- Fig. 3: eine Querschnittsdarstellung einer Formvorrichtung mit zwei Abstimmplatten gemäß einer Ausführungsform;
- Fig. 4: eine Draufsicht auf eine Formvorrichtung mit vier Abstimmplatten gemäß einer Ausführungsform; und
- Fig. 5: eine Draufsicht auf eine Abstimmplatte gemäß einer weiteren Ausführungsform mit zwei Querschnittsdarstellungen entlang der Schnittebenen A-A bzw. B-B.

- Fig. 6: eine Draufsicht auf eine Formvorrichtung mit Abstimmplatten gemäß einer Ausführungsform mit einer Querschnittsdarstellung entlang der Schnittebene B-B;

### Beschreibung von bevorzugten Ausführungsformen

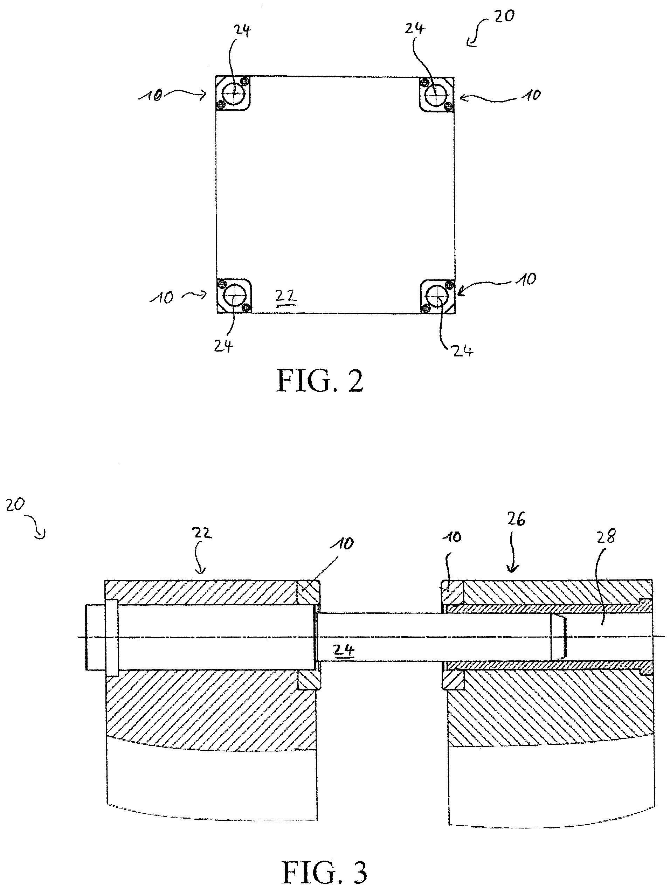

In der folgend verwendeten Lagebezeichnung, wie oben, unten, vorne, hinten, rechts und links beziehen sich - soweit nicht anders angegeben - auf die Draufsicht eines Betrachters auf eine vor ihm angeordnete Formvorrichtung bzw. Abstimmplatte, wobei der Betrachter auf eine Plattenfläche (Stirnfläche) der Abstimmplatte bzw. Formplatte sieht, wie etwa in Fig. 2 dargestellt.

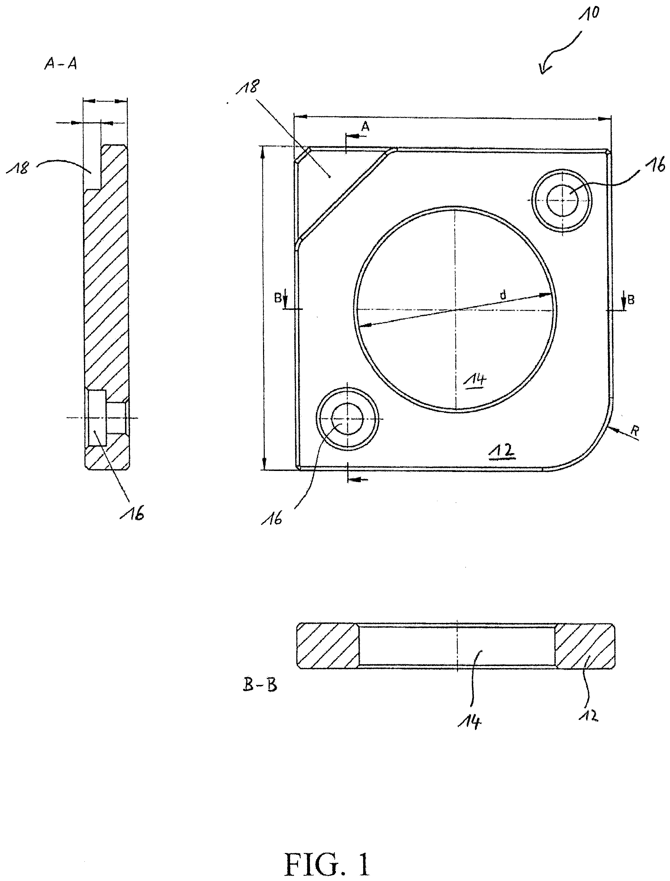

**Fig. 1** zeigt eine Draufsicht auf eine Ausführungsform einer Abstimmplatte 10 für Formvorrichtungen mit zwei Querschnittsdarstellungen entlang der Schnittebenen A-A bzw. B-B.

Die Abstimmplatte 10 weist in einem Hauptkörper 12 zwei Befestigungsausnehmungen 16 sowie eine Führungsausnehmung 14 auf.

Die zwei Befestigungsausnehmungen 16 sind symmetrisch angeordnet. Sie sind zum Einen punktsymmetrisch zu dem Mittelpunkt (welcher sowohl der Mittelpunkt der Abstimmplatte 10 als auch der Mittelpunkt der Führungsausnehmung 14 ist) angeordnet. Sie sind zudem achsensymmetrisch zu einer Mittelachse, welche in der Draufsicht von links oben nach rechts unten durch den Mittelpunkt verläuft, angeordnet.

Die symmetrische Anordnung erlaubt eine gleichmäßige und spannungsfreie Montage der Abstimmplatte auf einer Formplatte.

Die Befestigungsausnehmungen 16 dienen dazu, Befestigungsmittel aufzunehmen. Im dargestellten Fall handelt es sich bei den aufzunehmenden Befestigungsmitteln um Schrauben.

Die Befestigungsausnehmungen 16 weisen (wie aus dem Querschnitt A-A ersichtlich) eine Senkung zur Aufnahme eines Schraubenkopfes auf. Dies erlaubt eine Befestigung der Abstimmplatte ohne Überstand des Schraubenkopfes über die Oberfläche der Abstimmplatte. Die Senkung für die Schraube kann etwa nach DIN 7984 ausgestaltet sein.

Die Führungsausnehmung 14 dient dazu, eine Führungssäule einer Formplattenanordnung aufzunehmen. Die Abstimmplatte 10 ist im Wesentlichen rechteckig. Im dargestellten Fall ist eine Ecke des Rechtecks (in der Draufsicht der Fig. 1 die rechts unten angeordnete Ecke) abgerundet, mit einem Krümmungsradius R.

Die Führungsausnehmung 14 ist im Wesentlichen um einen Mittelpunkt der Abstimmplatte angeordnet. Die Ausnehmung ist (in der Draufsicht der Fig. 1) kreisrund mit einem Durchmesser d und ist (wie aus dem Querschnitt B-B ersichtlich) zylindrisch ausgebildet.

Die Abstimmplatte 10 weist eine Absenkung 18 zum Eingreifen auf. Die Absenkung zum Eingreifen ist am Umfang der Abstimmplatte 10, an einer Ecke, angeordnet. Dies dient einer erleichterten Montage, Wartung, sowie als Schutz vor Beschädigung der Formplatten bei der Herstellung der Werkzeuge. Ein Nutzer kann etwa die Absenkung 18 dazu nutzen, im montierten Zustand (wenn beidseitig andere Elemente, wie Formplatten oder weitere Abstimmplatten im Wesentlichen bündig anliegen) die gesamte Anordnung sicher zu greifen.

**Fig. 2** zeigt eine Draufsicht auf eine Formvorrichtung 20 mit vier Abstimmplatten 10. Die vier Abstimmplatten 10 entsprechen der in Fig. 1 dargestellten Ausführungsform mit je einer zentralen Führungsausnehmung, zwei symmetrisch dazu angeordneten Befestigungsausnehmungen und einer Absenkung zum Eingreifen.

Die Formvorrichtung 20 umfasst zudem eine erste Formplatte 22. Die erste Formplatte 22 hat vier Führungssäulen 24 zum Führen einer zweiten (in Fig. 2 nicht dargestellten) Formplatte. Die zweite Formplatte hat mindestens vier Plattenausnehmungen zur Aufnahme der vier Führungssäulen.

Die vier Führungssäulen 24 sind in den vier Ecken der im Wesentlichen rechteckigen ersten Formplatte 22 angeordnet. Die Abstimmplatten 10 sind mit Hilfe ihrer Führungsausnehmungen ebenfalls in den vier Ecken der Formplatte montiert. Im dargestellten Fall sind sie somit in einem größtmöglichen Abstand von der Mitte der Formplatte montiert. Diese Anordnung erlaubt eine optimale Abstimmung.

Die vier Abstimmplatten 10 dienen dazu, die Führungssäulen 24 in den mit Bezug auf Fig. 1 detailliert beschriebenen Führungsausnehmungen aufzunehmen. Die zylindrische Form der Führungsausnehmung entspricht im Wesentlichen der zylindrischen Form der Führungssäulen 24.

**Fig. 3** zeigt eine Querschnittsdarstellung eines Teils einer Formvorrichtung mit zwei Abstimmplatten gemäß einer Ausführungsform.

Die Formvorrichtung 20 hat zwei Formplatten 22 und 26, nämlich eine erste Formplatte 22 (Formoberteil) und eine zweite Formplatte 26 (Formunterteil), die auch als Formhälften bezeichnet werden, in einer (teilweise) geöffneten Position. Aus Darstellungsgründen ist lediglich ein Teilausschnitt der Formplatten in der Nähe einer Führungssäule gezeigt. Typischerweise kann die Formvorrichtung weitere identische oder ähnliche Führungssäulen aufweisen. Die beiden Formhälften 22 und 26 können über einen bekannten Öffnungs- bzw. Schließmechanismus (nicht gezeigt) von der geöffneten in die geschlossene Position und umgekehrt gebracht werden.

Beim Schließen der beiden Formhälften 22, 26 erfolgt ein bündiges Ausrichten der beiden Formhälften. Eine Führungssäule 24 kann mit einer komplementären Plattenausnehmung 28 (auch Führungsbuchse genannt) in Eingriff gehen und dabei die beiden Formhälften 22, 26 gegeneinander ausrichten. Dazu ist die Führungssäule 24 an ihrem von der ersten Formplatte 22 abgewandten Ende abgerundet und die Plattenausnehmung 28 mit einem gewissen Spiel gegenüber der Führungssäule 24 ausgebildet. Die Führungssäule 24 ist in der ersten Formhälfte 22 angeordnet und die Plattenausnehmung 28 in dem entsprechenden Bereich (z.B. Ecke) der zweiten Formhälfte 26; beide Elemente können jedoch auch umgekehrt angeordnet sein.

Die Formvorrichtung 20 kann beispielsweise beim Spritzgussverfahren zur Herstellung von Kunststoffprodukten oder für ein Druckgussverfahren für die Herstellung von metallischen Produkten verwendet werden. In der in Fig. 3 gezeigten, offenen Stellung bilden die Formhälften 22 und 26 dazwischen noch keinen geschlossenen Hohlraum. In der nicht gezeigten, geschlossenen Stellung bilden sie einen geschlossenen Hohlraum für den zu formenden Gegenstand. In diesen Hohlraum wird bei einem Spritzgussverfahren beispielsweise ein Kunststoff oder ein anderes geeignetes Material in einer nicht gezeigten Spritzvorrichtung plastifiziert und in den Hohlraum eingespritzt. Beim Druckgussverfahren wird eine metallische Schmelze unter Druck in diesen Hohlraum eingebracht. Zum Einleiten des geschmolzenen Materials bzw. der jeweiligen Schmelze ist eine bekannte Angussvorrichtung (nicht gezeigt) vorgesehen, die über sog. Heißkanäle die jeweilige Schmelze zuleitet. Ein gehärteter bzw. erstarrter Gegenstand kann dann nach einem Öffnen der beiden Formhälften 22, 26 über eine Auswurfvorrichtung in bekannter Weise entnommen werden.

Die erste Formhälfte kann einstückig ausgebildet sein oder eine Aufspannplatte umfassen, auf der in bekannter Weise eine düsenseitige Formkonturplatte befestigt ist. Die Formkonturplatte umfasst in ihrem Inneren eine Form, die aus entsprechend geeigneten Materialien hergestellt ist. Zur Herstellung von kleineren Produktserien kann beispielsweise die Form aus Aluminium bestehen. Bei größeren Produktserien sind jedoch die Formen üblicherweise aus einem Stahl, beispielsweise vergüteter Werkzeugstahl und/oder Hartmetall gefertigt. In den Formen sind jeweils die Formkonturen als Negativabdruck eingearbeitet. Diese Formkonturen bestimmen die Form eines Gegenstandes.

Die beiden Formplatten weisen je (mindestens) eine Abstimmplatte 10 auf. Die Abstimmplatte 10 der ersten Formplatte 22 ist um die Führungssäule 24 angeordnet. Die Abstimmplatte 10 der zweiten Formplatte 26 ist um die Plattenausnehmung 28 angeordnet. Im dargestellten Fall ist die Plattenausnehmung 28 von einer Führungsschiene eingefasst.

In dem gezeigten Fall sind beide Abstimmplatten in eine jeweilige Abstimmabsenkung eingebracht, wobei die Höhe der Abstimmplatten größer als die Tiefe der Abstimmabsenkung ist, sodass die Abstimmplatten einen gewissen Überstand gegenüber der Formplatte aufweisen. Der Überstand kann beispielsweise etwa 1 bis 2 mm betragen.

Die Abstimmplatten 10 sind etwa über bekannte Befestigungsmittel beispielsweise Schrauben (nicht dargestellt) oder andere geeignete Maßnahmen mit der jeweiligen Formplatte 22, 26 verbunden.

Die Stirnseite der an der ersten Formplatte 22 angebrachten Abstimmplatte bildet eine Auflagefläche 16, die im geschlossenen Zustand (nicht gezeigt) auf der entsprechenden Stirnseite der an der zweiten Formplatte 26 angebrachten Abstimmplatte aufliegt.

Die Nutzung der Abstimmplatten 10 erlaubt daher, den im geschlossenen Zustand auftretenden Druck zu verteilen und der Verschleiß reduziert werden. Es kann zudem das Fertigmaß abgestimmt werden. Dies dient der Qualitätssteigerung.

In manchen Ausführungsformen kann die noch verbleibende Fläche der Abstimmplatte noch geschliffen werden, d.h. nur einen Teilbereich der Oberfläche der Formplatte, nicht die gesamte Formplatte. Dies hat den Vorteil, dass eine Schleifmaschine mit relativ geringem Verfahrweg ausreicht.

Bei Spritzgusswerkzeugen und Druckgusswerkzeugen ist diese Abstimmung vorteilhaft, um zu verhindern, dass die Formkonturen der jeweiligen Formhälften 22 und 26 aus einer Ausrichtung zueinander gelangen und dabei einander gegenseitig beschädigen. Ebenso ist dies vorteilhaft, um eine entsprechende Qualität der geformten Gegenstände zu gewährleisten. Entsprechendes gilt auch für umformende Werkzeuge (z.B. Präge-/Biegewerkzeug).

An der zweiten Formhälfte 26, auch Auswerferseite genannt, kann ein Auswurfmechanismus vorgesehen sein, der in bekannter Weise nach einem Formen eines zu formenden Gegenstandes diesen aus der zweiten Formhälfte auswirft.

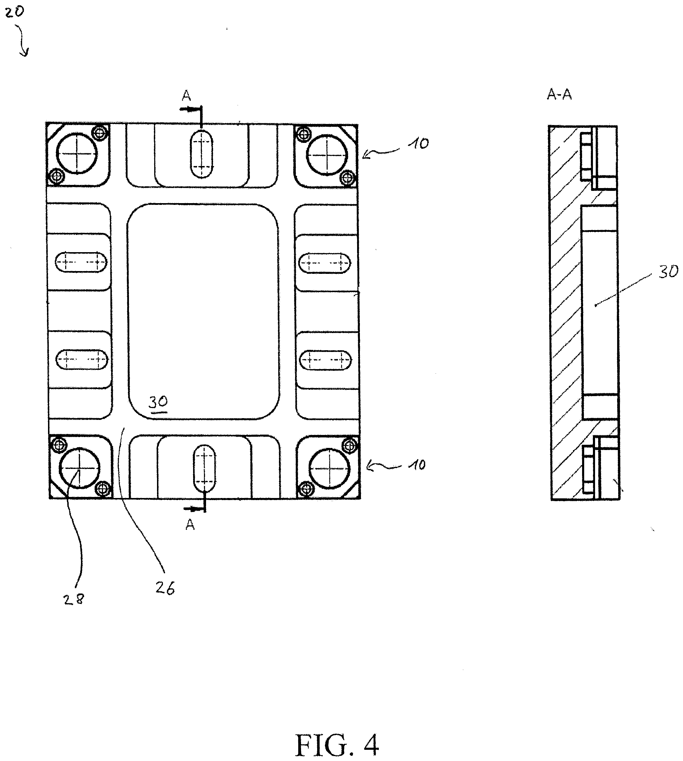

**Fig. 4** zeigt eine Draufsicht auf eine Formvorrichtung 20 mit vier Abstimmplatten 10. Die vier Abstimmplatten 10 entsprechen der in Fig. 1 dargestellten rechteckigen Ausführungsform mit (jeweils) einer zentralen Führungsausnehmung, zwei symmetrisch dazu angeordneten Befestigungsausnehmungen und einer Absenkung zum Eingreifen.

Die Formvorrichtung 20 umfasst zudem eine zweite Formplatte 26 mit vier entsprechend angeordneten Plattenausnehmungen 28. Jede der vier Plattenausnehmungen 28 dient zum Aufnehmen je einer Führungssäule einer ersten Formplatte mit Führungssäulen (in Fig. 4 nicht dargestellt).

Die vier Plattenausnehmungen 28 sind an den vier Ecken der im Wesentlichen rechteckigen zweiten Formplatte 26 angeordnet. Die Abstimmplatten 10 können in den vier Ecken der Formplatte montiert werden, ohne die Plattenausnehmungen 28 zu verdecken oder zu verschließen. Hierzu weist jede der Abstimmplatten 10 eine Führungsausnehmung auf, welche in Form und Durchmesser auf Form und Durchmesser auf die Plattenausnehmung 28 der zweiten Formplatte 26 eingestellt ist. Im dargestellten Fall sind die Führungsausnehmungen und die Plattenausnehmungen kreisrund mit (im Wesentlichen) identischem Durchmesser.

Des Weiteren weist die zweite Formplatte 26 einen Formbereich 30 auf. Hierbei handelt es sich im dargestellten Fall um eine Einsatzaussparung, die eine Formhälfte des zu formenden Gegenstands aufnimmt. Alternativ kann der Formbereich bereits eine Formhälfte darstellen.

Zudem weist die Formvorrichtung dem Fachmann bekannte Schieberaussparungen auf.

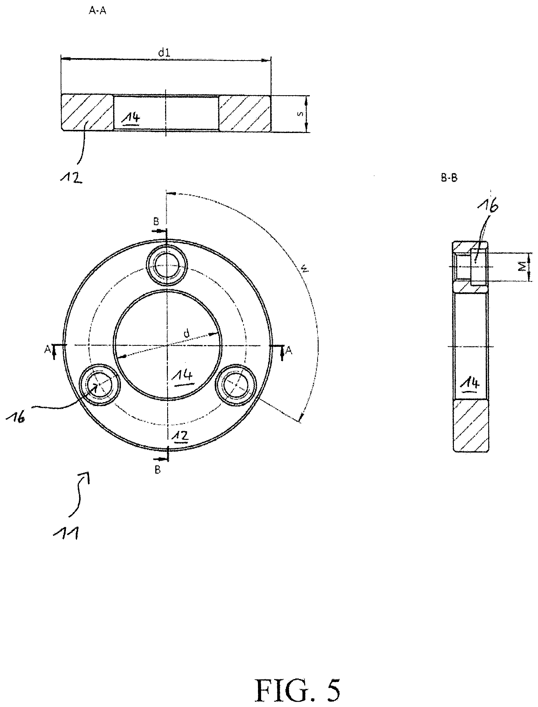

**Fig. 5** zeigt eine Draufsicht auf eine Abstimmplatte 10 gemäß einer weiteren Ausführungsform mit zwei Querschnittsdarstellungen entlang der Schnittebenen A-A bzw. B-B.

Die Abstimmplatte 10 weist in einem Hauptkörper 12 drei Befestigungsausnehmungen 16 sowie eine Führungsausnehmung 14 auf.

Die Führungsausnehmung 14 dient dazu, eine Führungssäule einer Formplattenanordnung aufzunehmen. Die Führungsausnehmung 14 ist im Wesentlichen um einen Mittelpunkt der Abstimmplatte angeordnet. Die Ausnehmung ist (in der Draufsicht der Fig. 1) kreisrund mit einem Durchmesser d und ist (wie aus dem Querschnitt B-B ersichtlich) zylindrisch ausgebildet.

Die Abstimmplatte 10 ist in der Draufsicht im Wesentlichen rund, mit einem Durchmesser dl. Die Führungsausnehmung 14 ist ebenfalls rund, mit einem Durchmesser d, welcher im dargestellten Fall etwa die Hälfte von d1 beträgt. Andere Verhältnisse von Außendurchmesser (Durchmesser des Hauptkörpers) zu Innendurchmesser (Durchmesser der Führungsausnehmung) sind möglich. Der Innendurchmesser ist regelmäßig durch die zu verwendenden Führungssäulen vorgegeben. Der Außendurchmesser kann dann so gewählt werden, dass bei hinreichender Stabilität dennoch Befestigungsausnehmungen vorgesehen werden können, ohne die Gesamtfläche der Abstimmplatte übermäßig groß zu wählen. Eine kompakte Abstimmplatte bietet mehr Möglichkeiten zur Montage auf Formplatten, die bereits eine Vielzahl anderer Elemente aufweisen.

Die drei Befestigungsausnehmungen 16 sind symmetrisch angeordnet. Sie sind zum Einen rotationssymmetrisch angeordnet, wobei die Rotationsachse entlang der Führungsausnehmung 14 durch dem Mittelpunkt (welcher sowohl der Mittelpunkt der Abstimmplatte 10 als auch der Mittelpunkt der Führungsausnehmung 14 ist) verläuft. Die drei Befestigungsausnehmungen 16 sind rotationssymmetrisch bei einer Rotation um einen Winkel w = 120° angeordnet. Sie sind zudem achsensymmetrisch (spiegelsymmetrisch) zu einer Mittelachse, welche in der Draufsicht durch den Mittelpunkt und eine der Befestigungsausnehmungen verläuft (beispielsweise entlang der Achse B-B), angeordnet.

Die Befestigungsausnehmungen 16 dienen dazu, Befestigungsmittel aufzunehmen. Im dargestellten Fall handelt es sich bei den aufzunehmenden Befestigungsmitteln um Schrauben. Hierzu weisen die Befestigungsausnehmungen 16 (wie aus dem Querschnitt B-B ersichtlich) eine Senkung zur Aufnahme eines Schraubenkopfes auf.

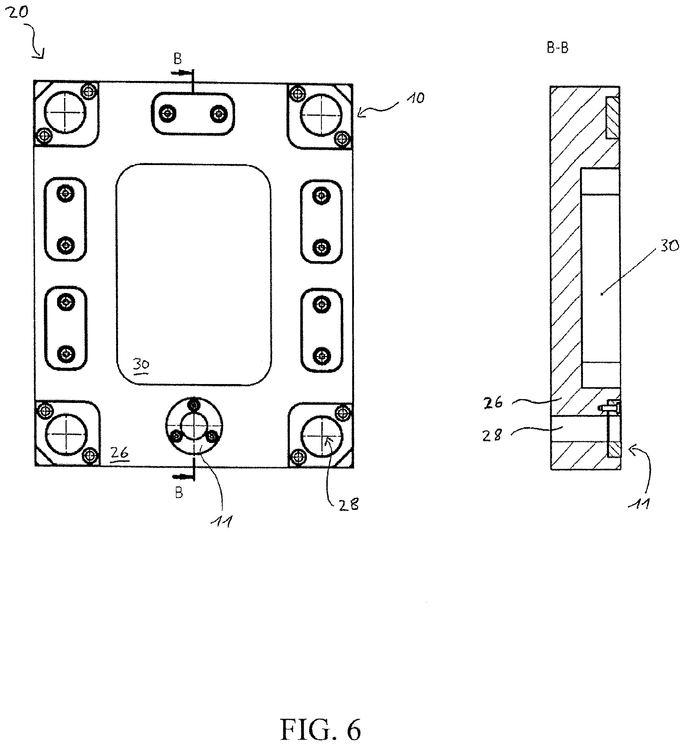

**Fig. 6** zeigt eine Draufsicht auf eine Formvorrichtung 20 mit Abstimmplatten 10 und 11 sowie mit einer zweiten Formplatte 26 mit einer Querschnittsdarstellung entlang der Schnittebene B-B.

Die Formplatte 26 weist fünf Plattenausnehmungen 28 zur Aufnahme von entsprechenden Führungssäulen einer (nicht dargestellten) ersten Formplatte auf. Vier der fünf Plattenausnehmungen 28 sind an den vier Ecken der im Wesentlichen rechteckigen Formplatte 26 angeordnet. Eine weitere Plattenausnehmung 28 ist in der dargestellten Draufsicht im unteren Randbereich (hier konkret: in Nähe der unteren Kante) mittig angeordnet.

Die vier an den Ecken angeordneten Plattenausnehmungen 28 sind mit je einer Abstimmplatte 10 versehen. Bei diesen Abstimmplatten 10 handelt es sich um die rechteckige Ausführungsform der Fig. 1. Diese vier Abstimmplatten 10 sind derart montiert, dass ihre jeweilige Führungsausnehmung fluchtend mit je einer Plattenausnehmung 28 angeordnet ist. In Bezug auf die Anordnung der Abstimmplatten 10 an der zweiten Formplatte 26 gilt im Übrigen das oben insbesondere mit Bezug auf Fig. 4 Beschriebene.

Die weitere, an der Kante mittig angeordnete Plattenausnehmung 28 ist mit einer Abstimmplatte 11 versehen. Bei dieser Abstimmplatte 11 handelt es sich um die runde Ausführungsform der Fig. 4.

Auch die Abstimmplatte 11 ist derart montiert, dass ihre Führungsausnehmung (wie aus dem Querschnitt B-B ersichtlich) fluchtend mit der entsprechenden Plattenausnehmung 28 angeordnet ist. Die Befestigungsausnehmungen der Abstimmplatte 11 nehmen je eine Schraube als Befestigungsmittel auf. Im dargestellten Fall (vgl. Querschnitt B-B) sind die Oberfläche der zweiten Formplatte 26, die Schraube und die Oberfläche der Abstimmplatte 11 bündig.

Hierzu weist die Formplatte 26 eine Abstimmabsenkung für die Abstimmplatte 11 auf. Die Absenkung ist dazu geeignet, die Abstimmplatte 11 aufzunehmen. So kann die Abstimmplatte 11 wie im dargestellten Fall bündig in die mindestens eine Abstimmabsenkung eingesetzt zu werden. Hierzu entspricht beispielsweise die Tiefe der Abstimmabsenkung der Höhe der Abstimmplatte. Die Abstimmabsenkung ist um die Plattenausnehmung 28 der zweiten Formplatte 26 ausgebildet. Ebenso ist in der Abstimmplatte 11 um jede Befestigungsausnehmung eine Senkung zur Aufnahme etwa eines Schraubenkopfes ausgebildet. Gleiches gilt für die an den Ecken angeordneten Abstimmplatten 10.

Zudem sind an der Formvorrichtung weitere, aus dem Stand der Technik bekannte Abstimmplatten ohne Führungsausnehmung angeordnet.

## Patentansprüche

1. Abstimmplatte (10, 11) für eine Formvorrichtung, welche in einem Hauptkörper (12) aufweist:
- eine Führungsausnehmung (14) zur Aufnahme einer Führungssäule der Formplattenanordnung und
- mindestens eine Befestigungsausnehmung (16a, 16b, 16c, 16d) zur Aufnahme von Befestigungsmitteln.

2. Abstimmplatte nach dem Anspruch 1, wobei die Abstimmplatte im Wesentlichen rechteckig oder im Wesentlichen rund ist.

3. Abstimmplatte nach einem der vorstehenden Ansprüche, wobei die Führungsausnehmung im Wesentlichen um einen Mittelpunkt der Abstimmplatte angeordnet ist.

4. Abstimmplatte nach einem der vorstehenden Ansprüche, wobei die Befestigungsausnehmungen im Wesentlichen symmetrisch um einen Mittelpunkt oder eine Mittelachse der Abstimmplatte angeordnet sind.

5. Abstimmplatte nach einem der vorstehenden Ansprüche, wobei die Abstimmplatte mindestens eine Absenkung (18) zum Eingreifen aufweist.

6. Abstimmplatte nach dem vorstehenden Anspruch, wobei die Absenkung (18) zum Eingreifen am Umfang der Abstimmplatte angeordnet ist, insbesondere an einer Ecke der Abstimmplatte.

7. Abstimmplatte nach einem der vorstehenden Ansprüche, wobei die Befestigungsausnehmung (16a, 16b, 16c, 16d) eine Senkung zur Aufnahme eines Schraubenkopfes aufweist.

8. Abstimmplatte nach einem der vorstehenden Ansprüche, wobei die Abstimmplatte (10) gehärtet ist.

9. Verwendung der Abstimmplatte nach einem der Ansprüche 1 bis 8 zum Abstimmen wenigstens zweier Formelemente einer Formvorrichtung zum Formen von geformten Gegenständen.

10. Formvorrichtung (20) umfassend
- eine erste Formplatte (22) mit mindestens einer Führungssäule (24),
- eine zweite Formplatte (26) mit mindestens einer Plattenausnehmung (28) zur Aufnahme der mindestens einen Führungssäule (24),
- mindestens eine Abstimmplatte (10, 11) nach einem der vorstehenden Ansprüche,
wobei die Abstimmplatte (10, 11) geeignet ist, die Führungssäule (24) in der Plattenausnehmung (28) aufzunehmen.

11. Formvorrichtung (20) nach Anspruch 10, wobei die erste Formplatte und/oder die zweite Formplatte mindestens eine Abstimmabsenkung aufweist, die dazu geeignet ist, die mindestens eine Abstimmplatte (10, 11) aufzunehmen.

12. Formvorrichtung (20) nach Anspruch 11, wobei die mindestens eine Abstimmplatte (10, 11) dazu geeignet ist, bündig oder überstehend in die mindestens eine Abstimmabsenkung eingesetzt zu werden.

13. Formvorrichtung (20) nach Anspruch 11 oder 12, wobei die Abstimmabsenkung um die Führungssäule (24) der ersten Formplatte (22) oder um die Plattenausnehmung der zweiten Formplatte (26) ausgebildet ist.

14. Formvorrichtung (20) nach einem der Ansprüche 11 bis 13, wobei die mindestens eine Abstimmabsenkung an dem äußeren Umfang und/oder einer äußeren Ecke der ersten Formplatte (22) und/oder der zweiten Formplatte (26) angeordnet ist.

15. Verwendung der Formvorrichtung (20) nach einem der Ansprüche 10 bis 14 in einem Spritzgussverfahren, insbesondere zur Herstellung eines Kunststoffprodukts, und/oder in einem Druckgussverfahren, insbesondere zur Herstellung eines metallischen Produkts.
